# EUROPEAN PATENT APPLICATION

(11) **EP 3 521 091 A1**
(43) Date of publication of application: **07.08.2019**
(21) Application number: 18154835.5
(22) Date of filing: 02.02.2018
(51) Int. Cl.: B60K 15/04, B67D 7/32

(54) **SYSTEM AND METHOD FOR REDUCING A RISK OF MISFUELLING**

(71) Applicant: NXP B.V., 5656 AG Eindhoven (NL)
(72) Inventor: PADMANABHA, Venkatesh, 5656 AG Eindhoven (NL)
(74) Representative: Krott, Michel

(57) **Abstract**

In accordance with a first aspect of the present disclosure, a system for reducing a risk of misfuelling is provided, comprising: a radio frequency (RF) receiver configured to receive a fuel type identifier; a controller configured to compare the received fuel type identifier with a reference value, wherein said controller is further configured to output a signal for controlling a part of a fuelling process in dependence on a result of comparing the received fuel type identifier with the reference value. A corresponding method is also conceived. Furthermore, a corresponding computer program is provided.

## Description

### OVERVIEW

The present disclosure relates to a system for reducing a risk of misfuelling. Furthermore, the present disclosure relates to a method for reducing a risk of misfuelling, and to a corresponding computer program. In recent years, misfuelling has grown from a virtually unheard problem to a widely discussed problem. Misfuelling a vehicle, i.e. providing a vehicle with the wrong type of fuel, is an important cause of vehicle breakdown. Examples of vehicle components that may get damaged as a result of misfuelling are fuel pumps, injectors, catalytic converters, fuel tanks, carburetors, valve guides and valve seats. Although the type of fuel is often clearly shown on a fuel dispenser, it remains easy to select a wrong type of fuel. Furthermore, in case the vehicle is a rental car, for example, the driver might not know exactly which fuel type is required. Therefore, it is important that the prevention of misfuelling is facilitated.

### SUMMARY

In accordance with a first aspect of the present disclosure, a system for reducing a risk of misfuelling is provided, comprising: a radio frequency (RF) receiver configured to receive a fuel type identifier; a controller configured to compare the received fuel type identifier with a reference value, wherein said controller is further configured to output a signal for controlling a part of a fuelling process in dependence on a result of comparing the received fuel type identifier with the reference value.

In an embodiment, the signal initiates opening of a fuel lid if the received fuel type identifier matches the reference value.

In an embodiment, the RF receiver is disposed near a fuel inlet of a vehicle.

In an embodiment, the system further comprises a display configured to display a warning, wherein the controller is further configured to cause the display to display said warning if the received fuel type identifier does not match the reference value.

In an embodiment, the controller is further configured to switch on the display.

In an embodiment, the display is disposed near a fuel inlet of a vehicle.

In an embodiment, the RF receiver is a passive RF receiver.

In an embodiment, the system further comprises an RF transmitter configured to transmit the fuel type identifier.

In an embodiment, the RF transmitter is configured to transmit the fuel type identifier in a broadcast mode.

In an embodiment, the RF transmitter has a communication range of at most 10 centimeters.

In an embodiment, the RF transmitter is attached to or integrally formed with a fuel dispenser.

In an embodiment, the fuel type identifier and the reference value are indicative of at least one of the following fuel types: diesel fuel, petrol fuel, liquefied petroleum gas, high-performance fuel, biofuel.

In accordance with a second aspect of the present disclosure, a method for reducing a risk of misfuelling is conceived, comprising: receiving, by a radio frequency (RF) receiver, a fuel type identifier; comparing, by a controller, the received fuel type identifier with a reference value; outputting, by said controller, a signal for controlling a part of a fuelling process in dependence on a result of comparing the received fuel type identifier with the reference value.

In accordance with a third aspect of the present disclosure, a computer program is provided, comprising executable instructions which, when executed, carry out or control a method of the kind set forth.

In an embodiment, a non-transitory computer-readable medium comprising a computer program of the kind set forth.

### DESCRIPTION OF DRAWINGS

Embodiments will be described in more detail with reference to the appended drawings, in which:
Fig. 1 shows an illustrative embodiment of a system for reducing a risk of misfuelling;
Fig. 2 shows an illustrative embodiment of a method for reducing a risk of misfuelling;
Fig. 3 shows another illustrative embodiment of a method for reducing a risk of misfuelling;
Fig. 4 shows another illustrative embodiment of a system for reducing a risk of misfuelling;
Fig. 5 shows a further illustrative embodiment of a method for reducing a risk of misfuelling;
Fig. 6 shows a further illustrative embodiment of a system for reducing a risk of misfuelling;
Fig. 7 shows a further illustrative embodiment of a system for reducing a risk of misfuelling;
Fig. 8 shows an example of an implementation of a method for reducing a risk of misfuelling;
Fig. 9 shows another example of an implementation of a method for reducing a risk of misfuelling.

### DESCRIPTION OF EMBODIMENTS

As mentioned above, misfuelling a vehicle is an important cause of vehicle breakdown. Therefore, it is important that the prevention of misfuelling is facilitated. The various embodiments of systems and methods as disclosed herein facilitate the prevention of misfuelling.

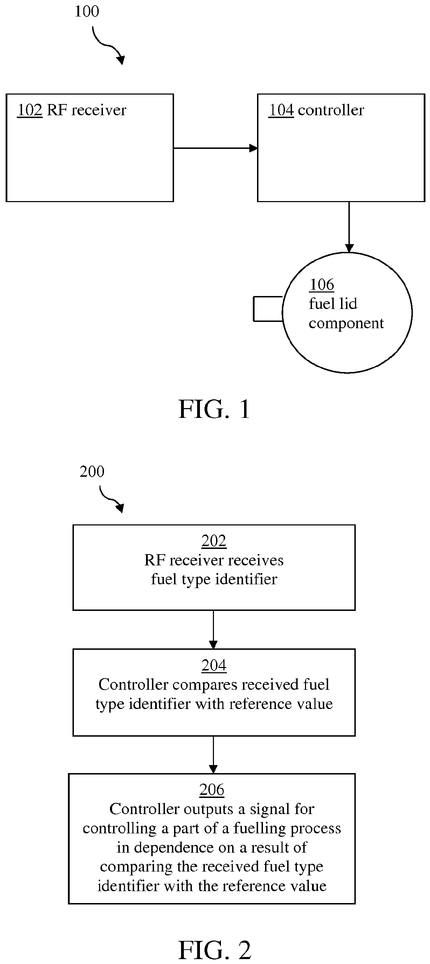

**Fig. 1** shows an illustrative embodiment of a system 100 for reducing a risk of misfuelling. The system 100 comprises an RF receiver 102 and a controller 104. In accordance with the present disclosure, the RF receiver 102 is configured to receive a fuel type identifier. Furthermore, the controller 104 is configured to compare the received fuel type identifier with a reference value, and to output a signal for controlling a part of a fuelling process in dependence on a result of comparing the received fuel type identifier with the reference value. The reference value may for example be stored in a memory (not shown) of the controller 104. In this way, the fuelling process may be influenced in a relatively simple manner, in order to reduce the risk of misfuelling.

In an embodiment, the signal initiates opening of a fuel lid if the received fuel type identifier matches the reference value. The fuel lid may form part of a fuel lid component 106, which also comprises an actuator for opening the fuel lid. The actuator may receive the signal from the controller 104 and open the fuel lid in response thereto. In this way, the fuel lid may be controlled automatically in dependence on a verification of the type of fuel. This may be less error prone than a user-controlled unlocking of the fuel lid, for example. Furthermore, the reduced proneness to errors can be achieved with a high degree of user convenience.

Opening the fuel lid is thus one part of the fuelling process that can be controlled in accordance with the presently disclosed system and method. Alternatively, or in addition, other parts of the fuelling process may be controlled in dependence on the result of comparing the received fuel type identifier with the reference value. For example, the signal may be transmitted to a fuel pump in order to stop said fuel pump, or the signal may be transmitted to the fuel pump in order to switch to another grade of fuel in case one fuel nozzle is used for different fuel types. Furthermore, it will be appreciated that the term "fuelling" is not limited to specific or traditional types of fuel, such as hydrocarbon fuels. In other words, the presently disclosed system and method can also be used to advantage for other types of fuels, such as hydrogen gas, and, for example, in electric charging systems.

In a practical and effective implementation, the RF receiver 102 is disposed near a fuel inlet (not shown) of a vehicle. Furthermore, the RF receiver 102 may be a passive RF receiver, which is powered by the RF field generated by a transmitter. In this way, the no additional power source needs to be provided near the fuel inlet of the vehicle. Furthermore, in an embodiment, the fuel type identifier and the reference value are indicative of at least one of the following fuel types: diesel fuel, petrol fuel, liquefied petroleum gas, high-performance fuel, biofuel. This facilitates the prevention of misfuelling for different types of vehicles.

Radio frequency identification (RF) devices are used in different areas of industry and commerce for various purposes. RF receivers may for example be embodied as so-called radio frequency identification (RFID) tags or smart card integrated circuits (ICs). RF transmitters may for example be embodied as so-called RFID readers, which often include battery-powered reading and writing capability over a contactless interface. It is noted that, in the present disclosure, near field communication (NFC) devices are regarded as a specific type of RF devices. Thus, the principles described herein may also be applied to NFC devices. In accordance with the present disclosure, the RF receiver 102 and controller 104 may both be comprised in a smart card IC. A smart card IC often comprises a processing unit that may carry out the functions of a controller 104 of the kind set forth. The operation of smart card ICs and their communication capabilities have been described and defined in different technical standards, such as ISO/IEC 14443. Alternatively, the RF receiver 102 and controller 104 may operate in accordance with other technologies and standards, such as ISO/IEC 18092 (near field communication - NFC - having a range of at most 10 centimeters) and ISO/IEC 18000-3 (radio frequency identification - RFID - having a range of at most 40 centimeters).

Fig. 2 shows an illustrative embodiment of a method 200 for reducing a risk of misfuelling. The method 200 comprises, at 202, receiving, by the RF receiver 102, a fuel type identifier. Furthermore, the method 200 comprises, at 204, comparing, by the controller 104, the received fuel type identifier with a reference value. Finally, the method 200 comprises, at 206, outputting, by the controller 104, a signal for controlling a part of a fuelling process in dependence on a result of comparing the received fuel type identifier with the reference value.

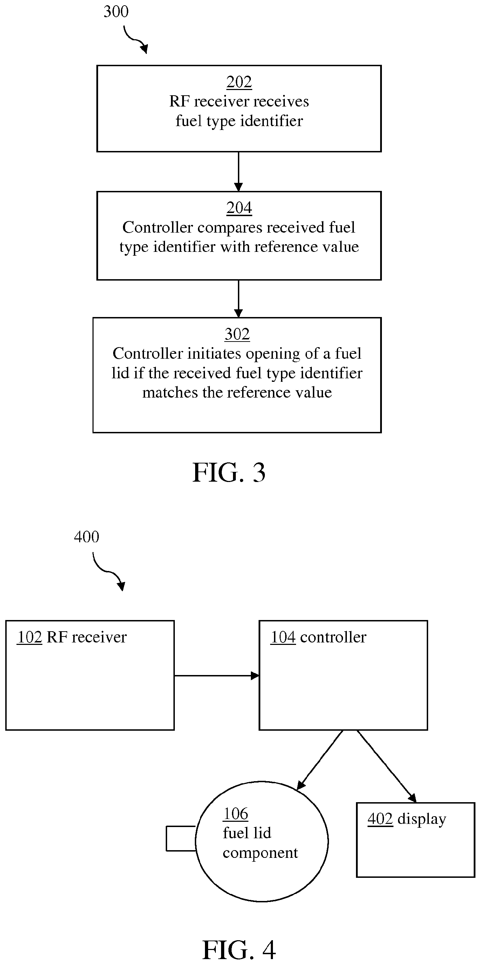

**Fig. 3** shows another illustrative embodiment of a method 300 for reducing a risk of misfuelling. The method 300 comprises, at 202, receiving, by the RF receiver 102, a fuel type identifier. Furthermore, the method 300 comprises, at 204, comparing, by the controller 104, the received fuel type identifier with a reference value. Finally, the method 300 comprises, at 302, initiating opening of the fuel lid if the received fuel type identifier matches the reference value. In particular, in step 302, the controller 104 may output a signal that causes an actuator of the fuel lid component 106 to open the fuel lid.

**Fig. 4** shows another illustrative embodiment of a system 400 for reducing a risk of misfuelling. The system 400 comprises the RF receiver 102 and the controller 104. In accordance with the present disclosure, the RF receiver 102 is configured to receive a fuel type identifier. Furthermore, the controller 104 is configured to compare the received fuel type identifier with a reference value, and to output a signal for controlling a part of a fuelling process - e.g. a control signal that causes an actuator of the fuel lid component 106 to open the fuel lid - in dependence on a result of comparing the received fuel type identifier with the reference value. In addition, the system 400 comprises a display 402. The display 402 is configured to display a warning. In an embodiment, the controller 104 is further configured to cause the display 402 to display said warning if the received fuel type identifier does not match the reference value. In this way, the user is quickly warned about his selection of the wrong fuel type. In a practical and efficient implementation, the controller 104 is also configured to switch on the display 402. In this way, the display 402 may remain off most of the time, which results in reduced power consumption and less wear of said display 402. Furthermore, in a practical and effective implementation, the display 402 is disposed near a fuel inlet (not shown) of a vehicle. In this way, the warning may be clearly visible to the user.

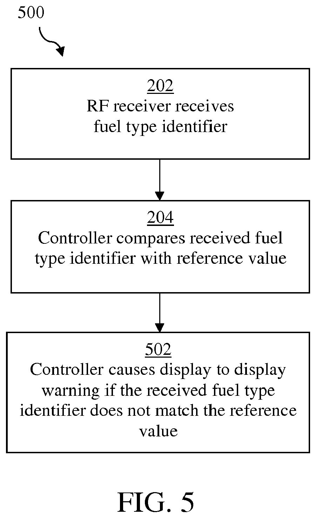

**Fig. 5** shows a further illustrative embodiment of a method 500 for reducing a risk of misfuelling. The method 500 comprises, at 202, receiving, by the RF receiver 102, a fuel type identifier. Furthermore, the method 500 comprises, at 204, comparing, by the controller 104, the received fuel type identifier with a reference value. Finally, the method 500 comprises, at 502, causing, by the controller 104, the display 402 to display a warning if the received fuel type identifier does not match the reference value.

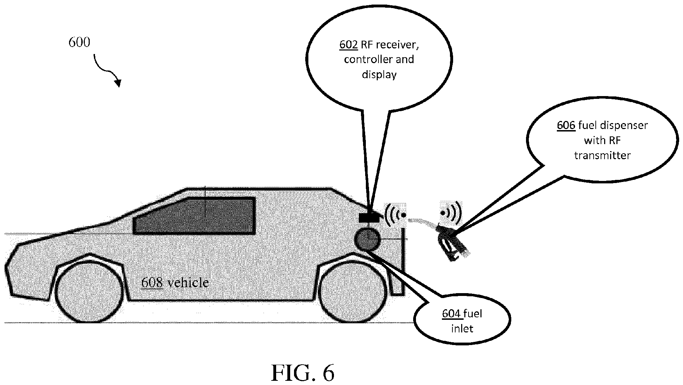

**Fig. 6** shows a further illustrative embodiment of a system 600 for reducing a risk of misfuelling. The system 600 comprises a first unit 602, which comprises an RF receiver, controller and display of the kind set forth. The first unit 602 may be disposed near a fuel inlet 604 of a vehicle 608. Furthermore, the system 600 comprises a second unit 606, which comprises a fuel dispenser equipped with an RF transmitter. Thus, in an embodiment, the system 600 comprises an RF transmitter. The RF transmitter is configured to transmit the fuel type identifier to the RF receiver. The transmitted fuel type identifier identifies the type of fuel dispensed by the fuel dispenser. In a practical and effective implementation, the RF transmitter is attached to or integrally formed with the fuel dispenser. For example, the RF transmitter may be attached to or be located near the nozzle of the fuel dispenser. Furthermore, in a practical and effective implementation, the RF transmitter is configured to transmit the fuel type identifier in a broadcast mode. In this way, since the fuel type identifier is continuously transmitted, or at least at regular intervals, the RF receiver quickly receives said fuel type identifier. Furthermore, in an embodiment, the RF transmitter has a communication range of at most 10 centimeters. In this way, the risk of interference by more remote fuel dispensers is minimized. In other words, if the communication range is limited it will be less likely that the RF receiver of the vehicle communicates with the wrong RF transmitter, i.e. an RF transmitter of a fuel dispenser other than the selected one.

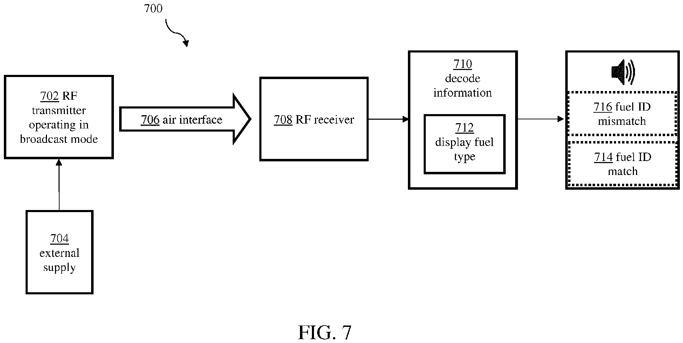

**Fig. 7** shows a further illustrative embodiment of a system 700 for reducing a risk of misfuelling. The system comprises an RF transmitter 702 that operates in a broadcast mode. In particular, the RF transmitter 702 broadcasts a fuel type identifier that identifies a type of fuel dispensed by a fuel dispenser (not shown). The RF transmitter 702 may be powered by an external power supply 704. The system 700 further comprises an RF receiver 708. In operation, the RF receiver 708 receives the fuel type identifier broadcasted by the RF transmitter 702 over an air interface 706. The fuel type identifier may have been broadcasted in encoded form. Therefore, the broadcasted information may be decoded 710 by a controller of the kind set forth. Also, the controller may cause a display to display the fuel type. Furthermore, the controller compares the received fuel type identifier with a reference value. This comparison may result in a match 714 or a mismatch 716. In case of a match 714, the controller may open a fuel lid (not shown). In case of a mismatch, the controller may keep the fuel lid locked and cause the display to display a warning.

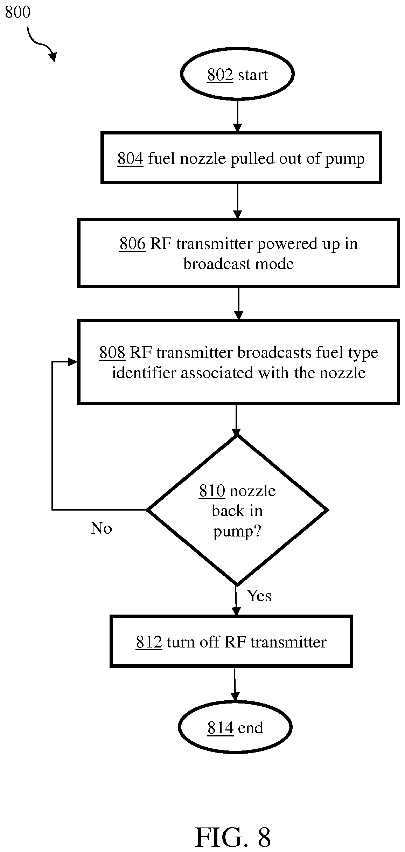

**Fig. 8** shows an example of an implementation of a method 800 for reducing a risk of misfuelling. In particular, the steps shown in Fig. 8 are executed at the transmitter side. The method starts at 802. At 804, a fuel nozzle is pulled out of a fuel pump. Then, at 806, an RF transmitter is powered up in a broadcast mode. Subsequently, at 808, the RF transmitter broadcasts a fuel type identifier associated with said nozzle. Periodically, it is checked 810 if the nozzle has been placed back into the fuel pump. If not, then RF transmitter keeps broadcasting the fuel type identifier. Otherwise, the RF transmitter is turned off 812. The method ends at 814.

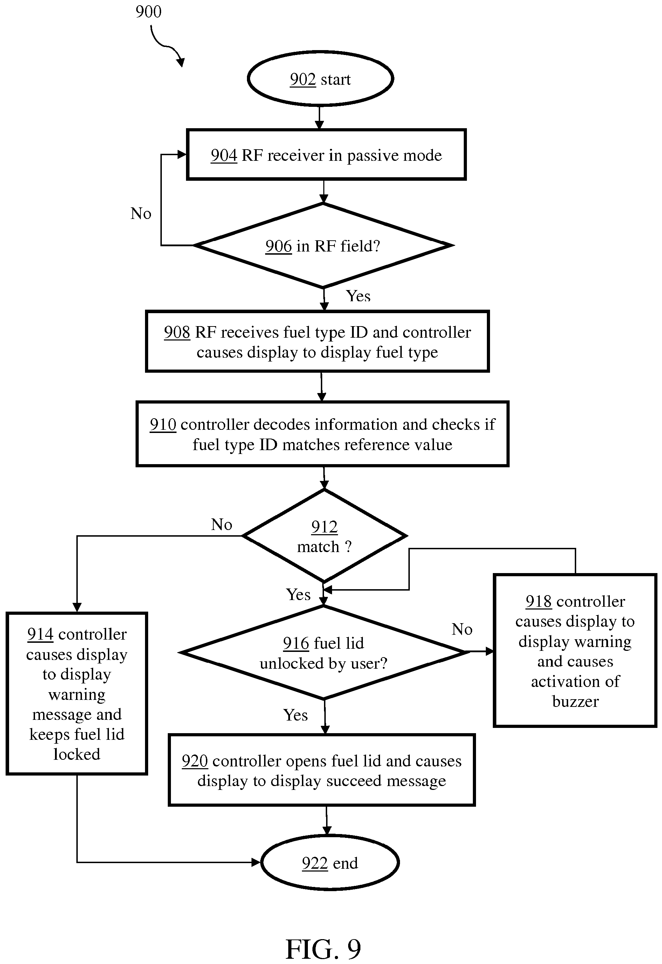

**Fig. 9** shows another example of an implementation of a method 900 for reducing a risk of misfuelling. In particular, the steps shown in Fig. 9 are executed at the receiver side. The method starts at 902. At 904, an RF receiver operates in a passive mode. If, at 906, the RF receiver enters an RF field generated by a transmitter, then it receives a fuel type identifier at 908. Furthermore, the controller may cause a display to display the fuel type. In case the fuel type identifier was received in encoded form, the controller decodes the information at 910, and checks if the fuel type identifier matches the reference value. In case of a match at 912, a further check 916 is performed, i.e. whether the fuel lid has been unlocked by the user. This user-controlled unlocking of the fuel lid may be the typical unlocking performed manually from within the vehicle. This additional check 916 may be performed as a safety measure, for example to prevent that a compromised automatic system will open the fuel lid. In case of a mismatch at 912, the controller causes, at 914, the display to display a warning message and keeps the fuel lid locked. If, at 916, it is determined that the fuel lid has been unlocked by the user, the controller opens, at 920, the fuel lid. Furthermore, the controller may cause the display to display a succeed message. If, at 916, it is determined that the fuel lid has not been unlocked by the user, the controller causes, at 918, the display to display a warning and causes the activation of a buzzer. In that case, the user may manually unlock the fuel lid, after which the controller may open the fuel lid at 920. The method ends at 922.

The systems and methods described herein may at least partially be embodied by a computer program or a plurality of computer programs, which may exist in a variety of forms both active and inactive in a single computer system or across multiple computer systems. For example, they may exist as software program(s) comprised of program instructions in source code, object code, executable code or other formats for performing some of the steps. Any of the above may be embodied on a computer-readable medium, which may include storage devices and signals, in compressed or uncompressed form.

As used herein, the term "computer" refers to any electronic device comprising a processor, such as a general-purpose central processing unit (CPU), a specific-purpose processor or a microcontroller. A computer is capable of receiving data (an input), of performing a sequence of predetermined operations thereupon, and of producing thereby a result in the form of information or signals (an output). Depending on the context, the term "computer" will mean either a processor in particular or more generally a processor in association with an assemblage of interrelated elements contained within a single case or housing.

The term "processor" or "processing unit" refers to a data processing circuit that may be a microprocessor, a co-processor, a microcontroller, a microcomputer, a central processing unit, a field programmable gate array (FPGA), a programmable logic circuit, and/or any circuit that manipulates signals (analog or digital) based on operational instructions that are stored in a memory. The term "memory" refers to a storage circuit or multiple storage circuits such as read-only memory, random access memory, volatile memory, non-volatile memory, static memory, dynamic memory, Flash memory, cache memory, and/or any circuit that stores digital information.

As used herein, a "computer-readable medium" or "storage medium" may be any means that can contain, store, communicate, propagate, or transport a computer program for use by or in connection with the instruction execution system, apparatus, or device. The computer-readable medium may be, for example but not limited to, an electronic, magnetic, optical, electromagnetic, infrared, or semiconductor system, apparatus, device, or propagation medium. More specific examples (non-exhaustive list) of the computer-readable medium may include the following: an electrical connection having one or more wires, a portable computer diskette, a random access memory (RAM), a read-only memory (ROM), an erasable programmable read-only memory (EPROM or Flash memory), an optical fiber, a portable compact disc read-only memory (CDROM), a digital versatile disc (DVD), a Blu-ray disc (BD), and a memory card.

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Furthermore, it is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

Finally, it is noted that the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

### LIST OF REFERENCE SIGNS

- 100: system for reducing a risk of misfuelling
- 102: RF receiver
- 104: controller
- 106: fuel lid component
- 200: method for reducing a risk of misfuelling
- 202: RF receiver receives fuel type identifier
- 204: controller compares received fuel type identifier with reference value
- 206: controller outputs a signal for controlling a part of a fuelling process in dependence on a result of comparing the received fuel type identifier with the reference value
- 300: method for reducing a risk of misfuelling
- 302: controller initiates opening of a fuel lid if the received fuel type identifier matches the reference value
- 400: system for reducing a risk of misfuelling
- 402: display
- 500: method for reducing a risk of misfuelling
- 502: controller causes display to display warning if the received fuel type identifier does not match the reference value
- 600: system for reducing a risk of misfuelling
- 602: RF receiver, controller and display
- 604: fuel inlet
- 606: fuel dispenser with RF transmitter
- 700: system for reducing a risk of misfuelling
- 702: RF transmitter operating in broadcast mode
- 704: external supply
- 706: air interface
- 708: RF receiver
- 710: decode information
- 712: display fuel type
- 714: fuel ID match
- 716: fuel ID mismatch
- 800: method implementation example
- 802: start
- 804: fuel nozzle pulled out of pump
- 806: RF transmitter powered up in broadcast mode
- 808: RF transmitter broadcasts fuel type identifier associated with the nozzle
- 810: nozzle back in pump?
- 812: turn off RF transmitter
- 814: end
- 900: method implementation example
- 902: start
- 904: RF receiver in passive mode
- 906: in RF field?
- 908: RF receives fuel type identifier and controller causes display to display fuel type
- 910: controller decodes information and checks if the fuel type identifier matches a reference value
- 912: match?
- 914: controller causes display to display warning message and keeps fuel lid locked
- 916: fuel lid unlocked by user?
- 918: controller causes display to display warning and causes activation of buzzer
- 920: controller opens fuel lid and causes display to display succeed message
- 922: end

## Claims

1. A system for reducing a risk of misfuelling, comprising:
a radio frequency, RF, receiver configured to receive a fuel type identifier;
a controller configured to compare the received fuel type identifier with a reference value, wherein said controller is further configured to output a signal for controlling a part of a fuelling process in dependence on a result of comparing the received fuel type identifier with the reference value.

2. The system of claim 1, wherein the signal initiates opening of a fuel lid if the received fuel type identifier matches the reference value.

3. The system of claim 1 or 2, wherein the RF receiver is disposed near a fuel inlet of a vehicle.

4. The system of any preceding claim, further comprising a display configured to display a warning, wherein the controller is further configured to cause the display to display said warning if the received fuel type identifier does not match the reference value.

5. The system of claim 4, wherein the controller is further configured to switch on the display.

6. The system of claim 4 or 5, wherein the display is disposed near a fuel inlet of a vehicle.

7. The system of any preceding claim, wherein the RF receiver is a passive RF receiver.

8. The system of any preceding claim, further comprising an RF transmitter configured to transmit the fuel type identifier.

9. The system of claim 8, wherein the RF transmitter is configured to transmit the fuel type identifier in a broadcast mode.

10. The system of claim 8 or 9, wherein the RF transmitter has a communication range of at most 10 centimeters.

11. The system of any one of claims 8 to 10, wherein the RF transmitter is attached to or integrally formed with a fuel dispenser.

12. The system of any preceding claim, wherein the fuel type identifier and the reference value are indicative of at least one of the following fuel types: diesel fuel, petrol fuel, liquefied petroleum gas, high-performance fuel, biofuel.

13. A method for reducing a risk of misfuelling, comprising:
receiving, by a radio frequency, RF, receiver, a fuel type identifier;
comparing, by a controller, the received fuel type identifier with a reference value;
outputting, by said controller, a signal for controlling a part of a fuelling process in dependence on a result of comparing the received fuel type identifier with the reference value.

14. A computer program comprising executable instructions which, when executed, carry out or control the method of claim 13.

15. A non-transitory computer-readable medium comprising the computer program of claim 14.
